# EUROPÄISCHE PATENTANMELDUNG

(11) **EP 1 764 446 A1**
(43) Veröffentlichungstag der Anmeldung: **21.03.2007**
(21) Anmeldenummer: 06019440.4
(22) Anmeldetag: 18.09.2006
(51) Int. Cl.: E03F 1/00, E02B 11/00, F24J 3/08

(54) **Vorrichtung zur Versickerung für Regenwasser**

(30) Priorität: 19.09.2005 DE 102005044714
(71) Anmelder: REHAU AG + Co, 95111 Rehau (DE)
(72) Erfinder: Liebel, Volker, 91058 Erlangen (DE); Baumann, Warnfried, 91315 Höchstadt/Aisch (DE)

(57) **Zusammenfassung**

Die Erfindung betrifft eine Vorrichtung (1) zur Versickerung von Regenwasser, umfassend: eine vorzugsweise unterirdisch zu verlegende Speicherrigole (2), durch welche Regenwasser zur Versickerung hindurchleitbar ist. Aufgrund steigender Erdoberflächenversiegelung gibt es einen Bedarf für eine Versickerungsvorrichtung mit verbesserter Versickerungsleistung. Der Erfindung liegt die Aufgabe zugrunde, eine entsprechende Versickerungsvorrichtung bereitzustellen. Zur Lösung dieser Aufgabe ist erfindungsgemäß vorgesehen, dass die Vorrichtung zur Versickerung von Regenwasser der eingangs genannten Art zusätzlich eine unterhalb der Speicherrigole anzuordnende, flüssigkeitsdurchlässige Verteileinrichtung (3) aufweist, deren flächige Ausdehnung größer ist als eine Grundfläche der Speicherrigole, wobei das aus der Speicherrigole aussickernde Regenwasser durch die Verteileinrichtung aufstaubar und über deren flächige Ausdehnung verteilbar ist.

## Beschreibung

Die Erfindung betrifft eine Vorrichtung zur Versickerung von Regenwasser, umfassend: eine vorzugsweise unterirdisch zu verlegende Speicherrigole, durch welche Regenwasser zur Versickerung hindurchleitbar ist. Des Weiteren betrifft die Erfindung die Kombination einer Regenwasserversickerungsvorrichtung und einer Erdwärmenutzungsvorrichtung.

Versickerungsvorrichtungen werden verwendet, um Regenwasser, das auf eine versiegelte oder befestigte Fläche fällt, im Erdreich zu versickern. Eine gattungsgemäße Versickerungsvorrichtung ist beispielsweise aus der EP 1 260 640 A1 bekannt.

Aus der DE 102 00 106 A1 ist ein Versickerungssystem mit einem Versickerungsrohr, einem Kontroll- und Verteilerschacht sowie einem Kontroll- und Spülschacht bekannt, welches in einer Tiefe von ca. 800 mm über einem Erdkollektor angeordnet ist. Der Erdkollektor umfasst horizontal verlaufende Rohre mit Sammelrohren, welche die Enden der horizontal verlaufenden Rohre verbinden, für die Zu- und Ableitung eines Wärmemediums für die Nutzung von Erdwärme durch Wärmepumpen. Der Kontroll- und Verteilerschacht des Versickerungssystems ist mit einem diagonal über dem Erdkollektor verlaufenden, vliesummantelten Dränagerohr verbunden. Aus dem Dränagerohr tritt Regenwasser aus und erhöht den Feuchtigkeitsgehalt des Erdreichs. Aufgrund der Befeuchtung des Erdreichs soll ein Wirkungsgrad des Erdkollektors erhöht werden können.

Gerade in städtischen Bereichen nimmt der Anteil der bebauten und versiegelten Erdoberfläche stetig zu. Dadurch ergeben sich zunehmend Schwierigkeiten, anfallendes Regenwasser zur Versickerung in das Erdreich abzuleiten. Wegen der stark zunehmenden Erdoberflächenversiegelung und der folglich größeren, zu versickemden Regenwassermenge, besteht ein Bedarf, die Versickerleistung von herkömmlichen Speicherrigolen zu verbessern.

Gleichzeitig ist aber zu berücksichtigen, dass ein verstärkter, lokaler Eintrag von Sickerwasser in das Erdreich zu einer örtlichen Veränderung der Bodenbeschaffenheit führen kann, und es auf Dauer zu Folgeerscheinungen wie einem Aufweichen und Absacken des Bodens kommen kann.

Der Erfindung liegt die Aufgabe zu Grunde, eine herkömmliche, gattungsgemäße Versickerungsvorrichtung zu verbessern, um die aus dem Stand der Technik bekannten Probleme zu lösen.

Zur Lösung dieser Aufgabe stellt die Erfindung eine Vorrichtung zur Versickerung von Regenwasser bereit, welche umfasst: eine vorzugsweise unterirdisch zu verlegende Speicherrigole, durch welche Regenwasser zur Versickerung hindurchleitbar ist, eine unterhalb der Speicherrigole anzuordnende, flüssigkeitsdurchlässige Verteileinrichtung, deren flächige Ausdehnung größer ist als eine Grundfläche der Speicherrigole, wobei das aus der Speicherrigole aussickernde Regenwasser durch die Verteileinrichtung aufstaubar und über deren flächige Ausdehnung verteilbar ist. Durch die Verteileinrichtung kann das zu versickernde Regenwasser im Wesentlichen gleichmäßig über eine bedeutend größere Fläche verteilt und versickert werden, als es durch die herkömmliche Speicherrigole möglich ist. Insgesamt kann die Versickerungsleistung der Versickerungsvorrichtung durch die erfindungsgemäße Lösung erheblich gesteigert werden, da das Erdreich nicht wie bei herkömmlichen Speicherrigolen lokal bis zur Sättigkeitsgrenze befeuchtet wird, sondern im Wesentlichen gleichmäßig mit Sickerwasser beaufschlagt wird. In Folge dessen wird auch die Gefahr eines lokalen Aufweichens des Erdbodens deutlich verringert.

Um den angesprochenen Effekt der Verteileinrichtung besonders wirkungsvoll zu nutzen, ist es von Vorteil, wenn die flächige Ausdehnung der Verteileinrichtung zumindest zweimal so groß ist wie eine Grundfläche der Speicherrigole.

Bauraum ist häufig nur begrenzt verfügbar. Die Speicherrigole ist daher vorzugsweise kompakt gebaut, um auf möglichst kleiner Fläche ein möglichst großes Speichervolumen zu bieten. Die Speicherrigole weist deshalb eine entsprechende Bauhöhe auf. Dagegen erstreckt sich die Verteileinrichtung vorzugsweise über besonders große Flächen. Es bedarf allerdings keiner besonderen Bauhöhe. Im Gegenteil ist, unter anderem zum Zweck des geringen Materialverbrauchs und der einfachen Transportierbarkeit der Verteileinrichtung, eine besonders geringe Bauhöhe erwünscht.

Daher erweist es sich als vorteilhaft, wenn eine Höhe der Speicherrigole eine Dicke der Verteileinrichtung vorzugsweise um ein Vielfaches übertrifft.

Um die Verteileinrichtung leicht an verschiedene Bodenstrukturen anpassen zu können, aber auch, um die Verteileinrichtung möglichst kompakt und gefahrlos transportieren zu können, erweist es sich als hilfreich, wenn die Verteileinrichtung als zumindest abschnittsweise als ein flexibles Flächenelement ausgebildet ist.

In einer besonders einfachen Ausführungsform, die mit geringem Fertigungsaufwand und geringem Materialeinsatz herstellbar ist, weist die Verteileinrichtung eine perforierte Folie auf.

Für eine Serienproduktion mit großen Stückzahlen empfiehlt es sich ganz besonders, wenn die Verteileinrichtung aus Kunststoff, vorzugsweise Polyethylen oder Polypropylen, ausgebildet ist.

In einer bevorzugten Ausführungsform der erfindungsgemäßen Versickerungsvorrichtung weist die Verteileinrichtung ein mehrdimensional durchströmbares Flächenelement auf. Der Verteilfunktion der Verteileinrichtung - und damit der Versickerungsleistung der Versickerungsvorrichtung - ist es besonders zuträglich, wenn das Regenwasser innerhalb der Verteileinrichtung in mehreren Dimensionen ungehindert fließen kann.

Um in unterschiedlichen Dimensionen/Richtungen, z.B. in der Ebene der Verteileinrichtung und senkrecht zur Ebene der Verteileinrichtung, unterschiedliche Wasserdurchlässigkeiten zu erzeugen, erweist es sich als vorteilhaft, wenn die Verteileinrichtung mehrere Schichten aufweist.

In einer weiteren bevorzugten Ausführungsform der erfindungsgemäßen Versickerungsvorrichtung weist die Verteileinrichtung eine im Wesentlichen poröse Stützstruktur und wenigstens eine die Stützstruktur zumindest abschnittsweise bedeckende Deckschicht auf. Die poröse Stützstruktur ermöglicht ein im Wesentlichen ungehindertes Verteilen des zu versickernden Regenwassers innerhalb der Verteileinrichtung, während die Deckschicht ein Eindringen des umliegenden Erdreichs in die porösen Freiräume der Stützstruktur verhindert.

In einer besonders bevorzugten Ausführungsform der erfindungsgemäßen Versickerungsvorrichtung ist die Stützstruktur zwischen zwei Deckschichten angeordnet. Die sich ergebende Verteileinrichtung ist besonders stabil, widerstandsfähig, verschmutzungsresistent und daher besonders langlebig.

Wenn die Deckschicht mattenförmig und flexibel ist, kann sie etwaigen strukturellen Besonderheiten der Stützstruktur besonders einfach angepasst werden.

Eine besonders umweltverträgliche Ausführung der erfindungsgemäßen Versickerungsvorrichtung kann dadurch bewerkstelligt werden, dass die Deckschicht ein wasserdurchlässiges, filterstabiles Geotextil aufweist.

Vliesstoffe sind als Deckschicht für die Verteileinrichtung besonders gut geeignet. Demnach ist es von Vorteil, wenn die Verteileinrichtung zumindest eine durchströmbare Vlieslage aufweist.

In einer besonders bevorzugten Ausführungsform der erfindungsgemäßen Versickerungsvorrichtung ist die Verteileinrichtung als Drainagematte ausgebildet. Drainagematten sind an sich bekannt und werden beispielsweise verwendet, um ein an Kellerwände heranreichendes Sickerwasser entlang der Kellerwände abzuführen. Drainagematten sind flüssigkeitsdurchlässig und ermöglichen eine im Wesentlichen uneingeschränkte Flüssigkeitsverteilung in ihrem Inneren.

Für eine im Wesentlichen gleichmäßige Verteilung von Sickerwasser über die flächige Ausdehnung der Verteileinrichtung ist es von Vorteil, wenn die Verteileinrichtung im Wesentlichen in horizontaler Lage verlegt ist.

Damit sich das aus der Speicherrigole aussickernde Sickerwasser möglichst schnell und gleichmäßig verteilt, ist es besonders bei einer horizontalen Verlegung der Verteileinrichtung von Vorteil, wenn die Speicherrigole bezüglich der flächigen Ausdehnung der Verteileinrichtung im Wesentlichen in zentrierter Position angeordnet ist.

Die Verteileinrichtung kann allerdings auch eine kegelförmige, pyramidenförmige, dachförmige, etc. Konfiguration einnehmen, wobei die Verteileinrichtung von einem zentralen erhabenen Punkt oder einer zentralen erhabenen Linie zu den Randbereichen hin abfällt.

Dies hat den Vorteil, dass das Sickerwasser durch den Einfluss der Schwerkraft schneller von dem zentralen erhabenen Punkt oder der zentralen erhabenen Linie zu den Randbereichen gelangt. Insbesondere zur Bewässerung von Böden mit Hanglage erweist es sich als vorteilhaft, wenn die Verteileinrichtung in einer gegenüber der Horizontalen geneigten Lage verlegt ist.

Dazu ist es hilfreich, wenn die Speicherrigole im Wesentlichen am höchsten Punkt der Verteileinrichtung angeordnet ist.

Bei besonders flüssigkeitsundurchlässigen Böden erweist es sich als vorteilhaft, wenn die Verteileinrichtung und die Speicherrigole unmittelbar benachbart zueinander angeordnet sind. Die Zeitspanne zwischen der Aussickerung aus der Speicherrigole und dem Erreichen der Verteileinrichtung kann dadurch erheblich verkürzt werden.

In einer besonders bevorzugten Ausführungsform der erfindungsgemäßen Versickerungsvorrichtung ist unterhalb der Verteileinrichtung eine Erdwärmenutzungsvorrichtung angeordnet. Durch den Eintrag des Sickerwassers, das in aller Regel eine höhere Temperatur aufweist als das Erdreich im Umfeld der Kollektorrohre, wird der Erdwärmenutzungsvorrichtung direkt Wärme zugeführt. Da darüber hinaus feuchtes Erdreich eine höhere Wärmeleitfähigkeit hat als im trockeneren Zustand, wird die Wärmeleitung zur Erdwärmenutzungsvorrichtung und damit deren spezifische Entzugsleistung nochmals erhöht.

Dazu ist es besonders vorteilhaft, wenn die Erdwärmenutzungsvorrichtung als Luft-Erdwärmetauscher und/oder als solegefüllter Erdwärmekollektor ausgebildet ist.

Eine besonders vorteilhafte Wechselwirkung zwischen der Versickerungsvorrichtung und der Erdwärmenutzungsvorrichtung ergibt sich dadurch, dass die Verteileinrichtung ein Kollektorfeld der Erdwärmenutzungsvorrichtung flächenmäßig im Wesentlichen vollständig überlappt.

Bei einer besonders vorteilhaften Ausführungsform der erfindungsgemäßen Kombination einer Regenwasserversickerungs- mit einer Erdwärmenutzungsvorrichtung werden diese Vorrichtungen zumindest teilweise unter versiegelten Oberflächen verlegt, was bei einer reinen Erdwärmenutzungsvorrichtung nur unter Inkaufnahme einer deutlichen Reduzierung des Wirkungsgrades möglich ist.

### Kurze Beschreibung der Zeichnungen

- Figur 1: zeigt eine schemenhafte Darstellung einer erfindungsgemäßen Vorrichtung zur Versickerung von Regenwasser mit einer horizontalen Anordnung der Verteileinrichtung.
- Figur 2: zeigt eine schemenhafte Darstellung einer erfindungsgemäßen Vorrichtung zur Versickerung von Regenwasser mit einer gegenüber der Horizontalen geneigten Anordnung der Verteileinrichtung.
- Figur 3: zeigt einen Ausschnitt einer Verteileinrichtung im Sinne der Erfindung.

### Detaillierte Beschreibung der bevorzugten Ausführungsbeispiele

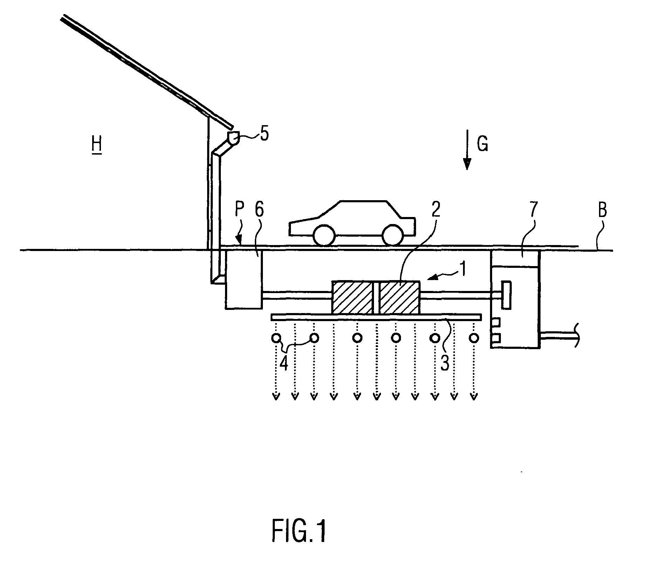

Nachstehend werden bevorzugte Ausführungsbeispiele der Erfindung mit Bezug auf die Figuren 1 bis 3 beschrieben.

In der nachfolgenden Beschreibung werden positionsangebende Begriffe wie "oben", "unten", "links", "rechts" oder dergleichen verwendet, die dem besseren Verständnis der Erfindungsbeschreibung dienen. Diese positionsangebenden Bezeichnungen sind jeweils nur im Bezug auf die jeweilige Darstellung in den Zeichnungen zu verstehen und haben darüber hinaus keinen bindenden Charakter.

Figur 1 zeigt schemenhaft eine erfindungsgemäße Vorrichtung 1 zur Versickerung von Regenwasser, umfassend: eine vorzugsweise unterirdisch zu verlegende Speicherrigole 2, durch welche das Regenwasser zur Versickerung hindurchleitbar ist, und eine unterhalb der Speicherrigole 2 angeordnete, flüssigkeitsdurchlässige Verteileinrichtung 3, deren flächige Ausdehnung größer ist als, vorzugsweise zumindest zweimal so groß ist wie die Grundfläche der Speicherrigole 2. In der Darstellung der Figur 1 ist die Verteileinrichtung 3 im Wesentlichen horizontal verlegt.

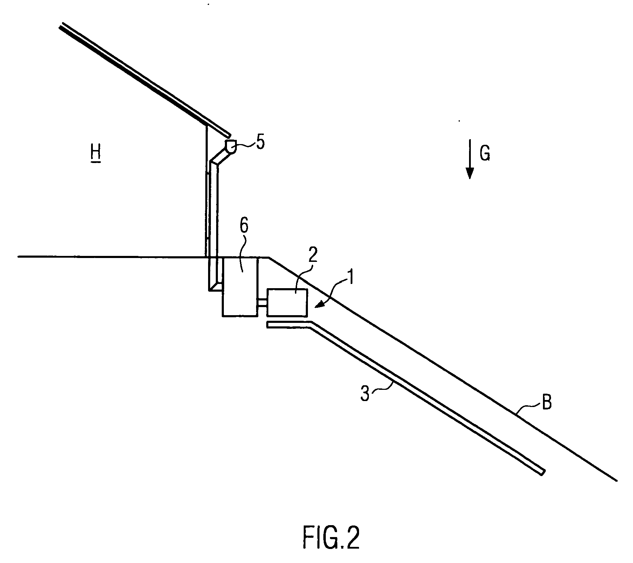

Figur 2 zeigt schemenhaft eine weitere erfindungsgemäße Versickerungsvorrichtung 1 mit unterirdisch verlegter Speicherrigole 2, und mit einer unterhalb der Speicherrigole 2 angeordneten Verteileinrichtung 3, welche in einer gegenüber der Horizontalen geneigten Lage verlegt ist.

Die Speicherrigole 2 definiert ein Speichervolumen zur Zwischenspeicherung und Versickerung von Regenwasser, welches von einer versiegelten Fläche abläuft, und von einer Sammelvorrichtung, wie einem Dachablauf 5 eines Wohnhauses, aufgesammelt wird. Die Speicherrigole 2 kann jede beliebige Form aufweisen und kann sowohl unterirdisch als auch überirdisch verlegt werden. Vorzugsweise wird die Speicherrigole 2 unterirdisch verlegt, und wird über eine Vorreinigungsstufe, wie z.B. einen Filter, an den Dachablauf 5 eines Hauses H angeschlossen. Die Speicherrigole 2 umfasst einen Strukturkörper, welcher das Speichervolumen im Erdreich freihält, wobei der Strukturkörper von einem flüssigkeitsdurchlässigen Geotextil, vorzugsweise Vliesstoff, umgeben ist, um ein Eindringen des umliegendem Erdreichs in das Speichervolumen zu verhindern. Der Einfachheit halber ist die Speicherrigole 2 nur schematisch dargestellt. Als Speicherrigole 2 im Sinne der Erfindung wird auch ein Verbund mit einer Vielzahl einzelner Speicherzellen, die übereinander oder nebeneinander angeordnet sein können, bezeichnet.

Die Erdoberfläche B oberhalb der Speicherrigole 2 kann versiegelt sein und beispielsweise als Stellfläche bzw. Parkplatz P für Pkw verwendet werden. Des weiteren kann ein zusätzlicher Anschluss (nicht gezeigt) vorgesehen sein, um das auf die Stellfläche P fallende Regenwasser über den Filter 6 in die Speicherrigole 2 einzuleiten.

In einer Sedimentationsanlage 6 wird das im Dachablauf 5 gesammelte Regenwasser vorgereinigt, wobei absetzbare Stoffe unter dem Einfluss der Schwerkraft G abgesetzt werden. Der Aufbau und die Wirkungsweise einer Sedimentationsanlage 6 wird als bekannt vorausgesetzt und soll an dieser Stelle nicht weiter ausgeführt werden.

Der Speicherrigole 2 kann ein Drosselschacht 7 nachgeschaltet werden, von welchem aus die Versickerleistung der Speicherrigole 2 reguliert werden kann. Der Aufbau und die Wirkungsweise eines Drosselschachts 7 wird ebenso als bekannt vorausgesetzt und soll an dieser Stelle nicht weiter ausgeführt werden.

Die Verteileinrichtung 3 ist als flüssigkeitsdurchlässiges, vorzugsweise flexibles Flächenelement ausgebildet, und umfasst wahlweise eine oder mehrere Schichten. Die flächige Ausdehnung der Verteileinrichtung 3 ist um ein Vielfaches größer als, vorzugsweise aber zumindest zweimal so groß wie die Grundfläche der Speicherrigole 2. Die Verteileinrichtung 3 dient dazu, das aus der Speicherrigole 2 aussickernde Regenwasser zumindest zeitweise aufzustauen und über ihre flächige Ausdehnung zu verteilen. Weil die Verteileinrichtung 3 flüssigkeitsdurchlässig ist, sickert das über ihre flächige Ausdehnung verteilte Sickerwasser gemächlich hindurch. Die Wasserdurchlässigkeit der Verteileinrichtung 3 wird vorzugsweise so gewählt, dass sie geringer ist als die Wasserdurchlässigkeit des umliegenden Erdreichs. Dadurch erfährt das Wasser beim Versickern einen Widerstand, welcher größer ist als der Widerstand parallel zur Verteileinrichtung 3, so dass sich das Regenwasser parallel zur Verteileinrichtung 3 verteilt, bevor es durch die flüssigkeitsdurchlässige Verteileinrichtung 3 sickert. Die spezifische Ausführung der Verteileinrichtung 3 kann je nach Bodenbeschaffenheit am Einsatzort variieren.

Bei einem relativ wasserdurchlässigen Boden, z.B. Kies, kann die Verteileinrichtung 3 beispielsweise als perforierte Folie, vorzugsweise aus Kunststoff, bevorzugt aus Polyethylen oder Polypropylen, ausgebildet sein. Durch Kies versickert Regenwasser verhältnismäßig schnell. Das aus der Speicherrigole 2 aussickernde Sickerwasser wird durch die als perforierte Folie ausgebildete Verteileinrichtung 3 an deren Oberseite aufgestaut und verteilt sich parallel zu deren Oberseite, bevor es durch die Perforationen der Folie hindurchsickert. Die Wasserdurchlässigkeit der perforierten Folie kann z.B. durch Veränderung der Form, Anordnung, Anzahl und Größe der Perforationen beeinflusst werden.

Bei einem relativ wasserundurchlässigen Boden, z.B. Lehm, kann die Verteileinrichtung 3 beispielsweise als mehrdimensional durchströmbares Flächenelement, z.B. als Drainagematte ausgebildet sein. Die als mehrdimensional durchströmbares Flächenelement ausgebildete Verteileinrichtung 3 funktioniert nach dem Prinzip, dass das aus der Speicherrigole 2 aussickernde Sickerwasser an der Oberseite der Verteileinrichtung 3 in dieselbe eindringt bzw. einsickert, im Inneren der Verteileinrichtung 3 über deren flächige Ausdehnung verteilt wird und an der Unterseite der Verteileinrichtung 3 wieder aus derselben austritt bzw. aussickert. Die Wasserdurchlässigkeit der als mehrdimensional durchströmbares Flächenelement ausgebildeten Verteileinrichtung 3 kann durch gezielte Materialauswahl und Gestaltung, z.B. als mehrschichtiges Flächenelement, beeinflusst werden.

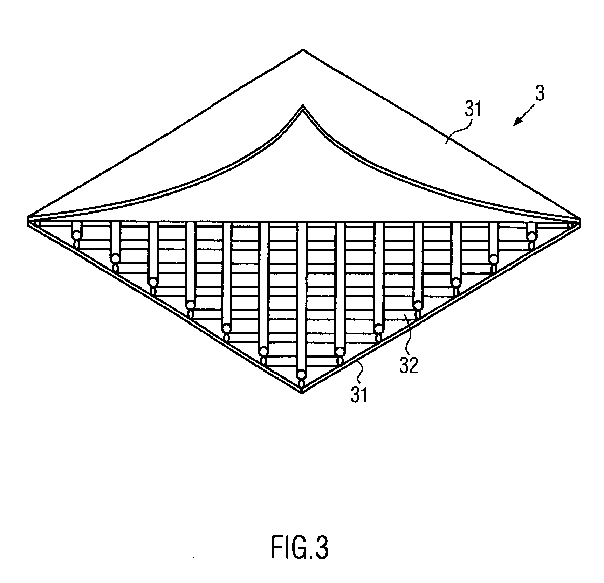

Drainagematten sind an sich bekannt und werden beispielsweise außerhalb von Kellerwänden verlegt, um seitlich an die Kellenwände heranreichendes Sickerwasser aufzunehmen und abzuführen. In Figur 3 wird der Aufbau einer Drainagematte 3 anhand eines Ausschnitts erläutert. Die Drainagematte 3 umfasst eine netzartige, poröse Stützstruktur 32, beispielsweise ein grobmaschiges Gittemetz aus wetterbeständigem Material, welche sandwichartig zwischen zwei Deckschichten 31 aus einem flüssigkeitsdurchlässigen, filterstabilen Geotextil, wie einem Vliesstoff, angeordnet ist. Die Stützstruktur 32 definiert ein mehrdimensional durchströmbares Volumen und hält dieses im Erdreich auch trotz großer einwirkender Kräfte frei, wobei die Deckschichten 31 das Eindringen des umliegenden Erdreichs verhindern. Zwischen den Deckschichten 31, d.h. in dem von der Stützstruktur 32 frei gehaltenen Volumen, kann eine Flüssigkeit in jeder beliebigen Richtung fließen. Dadurch wird die Flüssigkeitsverteilung innerhalb der Verteileinrichtung 3 wesentlich begünstigt. In bevorzugter Weise wird die Drainagematte 3 unmittelbar unterhalb der Speicherrigole 2 verlegt, so dass die Speicherrigole 2 und die Drainagematte 3 unmittelbar benachbart zueinander angeordnet sind. Dies hat die Wirkung, dass die Drainagematte 3 das aus der Speicherrigole 2 aussickernde Regenwasser ohne zeitliche Verzögerung aufnimmt, zumindest zeitweise aufstaut bzw. zurückhält und über ihre flächige Ausdehnung verteilt.

Die Verteileinrichtung 3 wird vorzugsweise in horizontaler Lage, wie in Figur 1 gezeigt wird, oder in einer gegenüber der Horizontalen geneigten Lage, wie in Figur 2 gezeigt wird, in einer Tiefe von etwa 1 m unter der Erdoberfläche B verlegt; sie kann aber auch in einer sonstigen, beliebigen Konfiguration im Erdreich verlegt werden. Im Speziellen kann die Verteileinrichtung 3 unter anderem auch eine kegelförmige, kegelstumpfförmige, pyramidenförmige, pyramidenstumpfförmige, dachförmige, etc. Konfiguration einnehmen, wobei die Verteileinrichtung 3 von einem zentralen erhabenen Punkt, einem zentralen erhabenen Bereich oder einer zentralen erhabenen Linie zu den Randbereichen hin abfällt. So gelangt das Sickerwasser durch den Einfluss der Schwerkraft schneller von dem zentralen erhabenen Punkt, dem zentralen erhabenen Bereich oder der zentralen erhabenen Linie zu den Randbereichen der Verteileinrichtung 3. Dabei ist die Speicherrigole 2 bezüglich der flächigen Ausdehnung der Verteileinrichtung 3 vorzugsweise im Wesentlichen in zentrierter Position angeordnet.

Unterhalb Verteileinrichtung 3 kann eine Vorrichtung zur Nutzung von Erdwärme (Erdwärmenutzungsvorrichtung) 4 zumindest abschnittsweise angeordnet sein, wie in Figur 1 schematisch veranschaulicht wird.

Die Vorteile der erfindungsgemäßen Versickerungsvorrichtung 1 kommen in Kombination mit einer Erdwärmenutzungsvorrichtung besonders deutlich zur Geltung. Die spezifische Entzugsleistung der Erdwärmenutzungsvorrichtung 4 unter Verwendung von Erdwärmekollektoren steht in engem Zusammenhang mit der Bodenbeschaffenheit. Die höchste Entzugsleistung wird bei wassergesättigtem Boden erreicht.

Die Erdwärmenutzungsvorrichtung 4 umfasst eine Wärmepumpe, einen Verteiler und eine Vielzahl von Kollektorrohren, vorzugsweise aus Kunststoff, bevorzugt Polyethylen, die in einer Tiefe von 1 m bis 2 m, vorzugsweise 1,5 m, und mit einem Rohrabstand von 0,2 m bis 0,8 m, vorzugsweise 0,5 m, verlegt werden. Zur Steigerung der Wärmeentzugsleistung können mehrere Kollektorkreise über den Verteiler zur Wärmepumpe geführt werden. Dabei umfasst jeder Kollektorkreis vorzugsweise jeweils zumindest ein im Wesentlichen mäanderförmig, schleifenförmig oder spiralförmig verlegtes Kollektorrohr, welches ein Kollektorfeld definiert.

Im Folgenden wird die Wirkungsweise der Erdwärmenutzungsvorrichtung 4 kurz umrissen. Innerhalb der Kollektorkreise zirkuliert ein Arbeitsmedium, welches in einem geschlossenen Kreislauf verdampft, verdichtet, verflüssigt und expandiert wird. Das Arbeitsmedium hat die Eigenschaft, bereits bei niedrigen Temperaturen zu verdampfen. Zunächst wird das Arbeitsmedium in einem ersten Wärmetauscher durch die Erdwärme zum Verdampfen gebracht und vom flüssigen in den gasförmigen Zustand überführt. Das gasförmige Arbeitsmedium wird anschließend von einem Kompressor angesaugt und verdichtet, und dabei auf ein höheres Energieniveau gehoben. Ein zweiter Wärmetauscher bewirkt, dass die der Umwelt entzogene Energie in ein Heiz- und Warmwassersystem eingespeist wird, wobei das gasförmige Arbeitsmedium expandiert. Anschließend wird das Arbeitsmedium mit geringem Druck und niedriger Temperatur dem ersten Wärmetauscher wieder zugeführt.

Zur Versorgung eines Einfamilienhauses durch Erdwärme mittels der Erdwärmenutzungsvorrichtung 4 wird eine Kollektorfeldgröße bzw. eine Kollektorfläche von ca. 400 Quadratmeter benötigt. Durch Verwendung der Verteilvorrichtung 3 kann die erforderliche Kollektorfeldgröße bzw. Kollektorfläche aufgrund der Steigerung der spezifischen Entzugsleistung der Erdwärmenutzungsvorrichtung 4 durch Erhöhung des Feuchtigkeitsgehalts im Erdreich zum Teil deutlich verringert werden. Die Verteileinrichtung 3 ist vorzugsweise so angeordnet, dass sie das Kollektorfeld bzw. die Kollektorfelder der Erdwärmenutzungsvorrichtung 4 im Wesentlichen vollständig überlappt.

Nachstehend werden die Merkmale der bevorzugten Anwendung der erfindungsgemäßen Versickerungsvorrichtung 1 in Kombination mit einer Erdwärmenutzungsvorrichtung 4 mit Bezug auf die beiliegenden Zeichnungen erläutert.

Für den bestimmungsgemäßen Gebrauch werden die erfindungsgemäße Versickerungsvorrichtung 1 und die Erdwärmenutzungsvorrichtung 4 im Rahmen der oben beschriebenen Möglichkeiten, beispielsweise wie in Figur 1 gezeigt wird, auf dem Grundstück eines Wohnhauses H verlegt. Die darüber liegende Erdoberfläche B kann versiegelt sein und beispielsweise als Stellfläche für Pkw verwendet werden.

Das im Dachablauf 5 des Hauses H anfallende Regenwasser wird über den vorgeschaltete Filter in die Speicherrigole 2 zur Versickerung eingeleitet. Von dort sickert das Regenwasser in das umliegende Erdreich aus. Die Versickerungsrichtung wird im Wesentlichen durch die Schwerkraft G, zum Teil aber auch durch die Bodenbeschaffenheit, beeinflusst. Im beschriebenen Beispiel wird eine im Wesentlichen homogene Bodenbeschaffenheit angenommen. Das aus der Speicherrigole 2 aussickernde Regenwasser trifft auf die unterhalb der Speicherrigole 2 angeordnete Verteileinrichtung 3 und staut sich infolge der geringeren Wasserdurchlässigkeit der Verteileinrichtung 3 im Vergleich zur Wasserdurchlässigkeit des umliegenden Erdreichs auf. Die Wasserdurchlässigkeit der Verteileinrichtung 3 ist durch gezielte Materialauswahl und Gestaltung vorzugsweise im Rahmen der oben beschriebenen Möglichkeiten beeinflussbar. Ist die Verteileinrichtung 3 als perforierte Folie ausgebildet, so verteilt sich darüber das aufgestaute Sickerwasser über deren flächige Ausdehnung und sickert allmählich durch die Perforationen der Folie hindurch. Ist die Verteileinrichtung 3 als mehrdimensional durchströmbares Flächenelement, z.B. als Drainagematte ausgebildet, so dringt bzw. sickert das aus der Speicherrigole 2 aussickernde Sickerwasser durch die obenliegende, flüssigkeitsdurchlässige Deckschicht 31 in das von der porösen Stützstruktur 32 frei gehaltene Volumen ein und verteilt sich im Inneren der Verteilvorrichtung 3 über deren flächige Ausdehnung, bevor es allmählich durch die untere, flüssigkeitsdurchlässige Deckschicht 31 austritt bzw. aussickert. Eine Neigung der Verteilvorrichtung 3 gegenüber der Horizontalen, wie in Figur 2 schematisch gezeigt wird, begünstigt die Umverteilung des Sickerwassers von höherliegenden Bereichen zu tiefer liegenden Abschnitten der Verteilvorrichtung 3.

Unterhalb der Verteilvorrichtung 3 befindet sich das Kollektorfeld der oben beschriebenen Erdwärmenutzungsvorrichtung 4, welches in Figur 1 schematisch durch die quer geschnittenen Kollektorrohre 4 symbolisiert wird. Die Verteilvorrichtung 3 ist gegenüber der Erdwärmenutzungsvorrichtung 4 bzw. den Kollektorrohren 4 so angeordnet, dass sie das von den Kollektorrohren 4 definierte Kollektorfeld im Wesentlichen vollständig überlappt und das unterhalb der Verteilvorrichtung 3 befindliche Erdreich, welches die Kollektorrohre 4 unmittelbar umgibt, im Wesentlichen gleichmäßig mit Sickerwasser beaufschlagt. Dadurch verbessert sich einerseits der Wärmeübergang zwischen dem Erdreich und den Kollektorrohren 4, andererseits wird durch das i.d.R. warme Regenwasser zusätzliche Energie in das Erdreich eingebracht. In Folge dessen wird die spezifische Entzugsleistung der Erdwärmenutzungsvorrichtung 4 erheblich verbessert. Die Erdwärme wird, wie oben beschrieben, in das Heiz- und Warmwassersystem des Wohnhauses H eingespeist.

Es versteht sich von selbst, dass die erfindungsgemäße Versickerungsvorrichtung auch zur Versickerung anderer Flüssigkeiten als Regenwasser eingesetzt werden kann. Die Bezeichnung "Erdreich" bezieht sich im Rahmen dieser Erfindungsbeschreibung im Übrigen auf Böden jeder möglichen Beschaffenheit und Zusammensetzung, z.B. Kies, Erde, Sand, Lehm, usw.

## Patentansprüche

1. Vorrichtung (1) zur Versickerung von Regenwasser, umfassend:
eine vorzugsweise unterirdisch zu verlegende Speicherrigole (2), durch welche Regenwasser zur Versickerung hindurchleitbar ist, **gekennzeichnet durch** eine unterhalb der Speicherrigole (2) anzuordnende, flüssigkeitsdurchlässige Verteileinrichtung (3), deren flächige Ausdehnung größer ist als eine Grundfläche der Speicherrigole (2), wobei das aus der Speicherrigole (2) aussickernde Regenwasser **durch** die Verteileinrichtung (3) aufstaubar und über deren flächige Ausdehnung verteilbar ist.

2. Vorrichtung nach Anspruch 1, **dadurch gekennzeichnet, dass** die flächige Ausdehnung der Verteileinrichtung (3) zumindest zweimal so groß ist wie die Grundfläche der Speicherrigole (2).

3. Vorrichtung nach Anspruch 1 oder 2, **dadurch gekennzeichnet, dass** eine Höhe der Speicherrigole (2) eine Dicke der Verteileinrichtung (3) vorzugsweise um ein Vielfaches übertrifft.

4. Vorrichtung nach einem der vorangegangenen Ansprüche, **dadurch gekennzeichnet, dass** die Verteileinrichtung (3) als zumindest abschnittsweise flexibles Flächenelement ausgebildet ist.

5. Vorrichtung nach einem der vorangegangenen Ansprüche, **dadurch gekennzeichnet, dass** die Verteileinrichtung (3) eine perforierte Folie aufweist.

6. Vorrichtung nach einem der vorangegangenen Ansprüche, **dadurch gekennzeichnet, dass** die Verteileinrichtung (3) aus Kunststoff, vorzugsweise Polyethylen oder Polypropylen, ausgebildet ist.

7. Vorrichtung nach einem der vorangegangenen Ansprüche, **dadurch gekennzeichnet, dass** die Verteileinrichtung (3) ein mehrdimensional durchströmbares Flächenelement aufweist.

8. Vorrichtung nach einem der vorangegangenen Ansprüche, **dadurch gekennzeichnet, dass** die Verteileinrichtung (3) mehrere Schichten aufweist.

9. Vorrichtung nach einem der vorangegangenen Ansprüche, **dadurch gekennzeichnet, dass** die Verteileinrichtung (3) eine im Wesentlichen poröse Stützstruktur (32) und wenigstens eine die Stützstruktur (32) zumindest abschnittsweise bedeckende Deckschicht (31) aufweist.

10. Vorrichtung nach einem der vorangegangenen Ansprüche, **dadurch gekennzeichnet, dass** die Stützstruktur (32) zwischen zwei Deckschichten (31) angeordnet ist.

11. Vorrichtung nach einem der vorangegangenen Ansprüche, **dadurch gekennzeichnet, dass** die Deckschicht (31) mattenförmig und flexibel ist.

12. Vorrichtung nach einem der vorangegangenen Ansprüche, **dadurch gekennzeichnet, dass** die Deckschicht (31) ein wasserdurchlässiges, filterstabiles Geotextil aufweist.

13. Vorrichtung nach einem der vorangegangenen Ansprüche, **dadurch gekennzeichnet, dass** die Verteileinrichtung (3) eine durchströmbare Vlieslage (31) aufweist.

14. Vorrichtung nach einem der vorangegangenen Ansprüche, **dadurch gekennzeichnet, dass** die Verteileinrichtung (3) als Drainagematte ausgebildet ist.

15. Vorrichtung nach einem der vorangegangenen Ansprüche, **dadurch gekennzeichnet, dass** die Verteileinrichtung (3) im Wesentlichen in horizontaler Lage verlegt ist.

16. Vorrichtung nach einem der vorangegangenen Ansprüche, **dadurch gekennzeichnet, dass** die Speicherrigole (2) bezüglich der flächigen Ausdehnung der Verteileinrichtung (3) im Wesentlichen in zentrierter Position angeordnet ist.

17. Vorrichtung nach einem der vorangegangenen Ansprüche, **dadurch gekennzeichnet, dass** die Verteileinrichtung (3) in einer gegenüber der Horizontalen geneigten Lage verlegt ist.

18. Vorrichtung nach einem der vorangegangenen Ansprüche, **dadurch gekennzeichnet, dass** die Speicherrigole (2) im Wesentlichen am höchsten Punkt der Verteileinrichtung (3) angeordnet ist.

19. Vorrichtung nach einem der vorangegangenen Ansprüche, **dadurch gekennzeichnet, dass** die Verteileinrichtung (3) und die Speicherrigole (2) unmittelbar benachbart angeordnet sind.

20. Vorrichtung nach einem der vorangegangenen Ansprüche, **dadurch gekennzeichnet, dass** unterhalb der Verteileinrichtung (3) eine Erdwärmenutzungsvorrichtung (4) zumindest abschnittsweise angeordnet ist.

21. Vorrichtung nach einem der vorangegangenen Ansprüche, **dadurch gekennzeichnet, dass** die Erdwärmenutzungsvorrichtung (4) als Luft-Erdwärmetauscher und/oder als solegefüllter Erdwärmekollektor ausgebildet ist.

22. Vorrichtung nach einem der vorangegangenen Ansprüche, **dadurch gekennzeichnet, dass** die Verteileinrichtung (3) ein Kollektorfeld (4) der Erdwärmenutzungsvorrichtung (4) flächenmäßig im Wesentlichen vollständig überlappt.

23. Vorrichtung nach einem der vorangegangenen Ansprüche, **dadurch gekennzeichnet, dass** die Vorrichtung (1) zur Versickerung von Regenwasser und die Erdwärmenutzungsvorrichtung (4) zumindest teilweise unter versiegelten Oberflächen verlegt sind.

24. Kombination aus einer Vorrichtung (1) zur Versickerung von Regenwasser nach einem der vorangegangenen Ansprüche und einer Erdwärmenutzungsvorrichtung (4).
